# EUROPEAN PATENT APPLICATION

(11) **EP 1 258 194 A1**
(43) Date of publication of application: **20.11.2002**
(21) Application number: 01870105.2
(22) Date of filing: 17.05.2001
(51) Int. Cl.: A21D 13/08, A21C 15/00, A21C 15/02, A21C 9/06, A23G 3/02, A23G 3/00

(54) **Method for the manufacturing of confectionery products and a wafer mould suitable therefor**

(71) Applicant: BVBA Impulse, 9700 Oudenaarde (BE)
(72) Inventor: Verschelden, Antoon Jules Georges, 9600 Ronse (BE)
(74) Representative: Brants, Johan Philippe Emile

(57) **Abstract**

The invention relates to a method for the preparation of confectionery products having a filling which is at least partly enclosed by a wafer, a wafer sheet comprising an array of interconnected half-shells comprised in a web, wherein each half-shell is provided with an opening for a filling purpose, a baking mould for a wafer sheet, wherein said mould is composed of an array of cavities comprising at the bottom of each a raised protuberance positioned as such that said raised surface remains free of wafer during moulding and baking so that it produces a wafer sheet comprising an array of interconnected half-shells having each an opening.

The invention is further related to a confectionery product obtainable by the method.

## Description

The invention relates to a method for manufacturing confectionery products, in particular products having a filling at least partly enclosed by a wafer shell consisting of two half-shells joined together.

Confectionery products comprising a shell formed by two wafer half-shells that encloses a filling are known in the art. There are various ways of making such confectionery products.

EP0083324 describes a method and machine for the manufacture of these types of confectionery products. The method relies essentially on the preparation of a spherical wafer shell constituted by a pair of filled hemispherical half-shells stuck together by the contact of their respective fillings. The method comprises the filling of each individual half-shell before bringing them together to form a spherical product.

EP0221033 discloses an apparatus for the cutting in series wafer half-shells using a wafer sheet composed of half-shells interconnected by a continuous flat wall. The single wafer half-shell can be then subjected to a further filling process.

From a technological point of view, the methods proposed before present various disadvantages: they are expensive in term of the apparatus requirements and are time consuming, as many steps are being involved in the process of manufacturing said confectionery products. Each single confectionery product consists of two half-shells, which are filled separately and then joined together. It is a cumbersome operation resulting in one single confectionery product at a time.

It is an object of the invention to provide improved methods and apparatus for mass manufacturing this type of confectionery products. The present invention alleviates to a great extend the disadvantages of the known methods and apparatus by providing a fast high-throughput industrial method of manufacturing.

Another object of the invention is to provide a filling method and apparatus allowing the differential filling of confectionery products.

A further object of the invention is also to provide a method for making confectionery products in series by providing improved moulds for the making of suitable wafer products.

According to the present invention these objects are achieved a method for the preparation of confectionery products having a filling which is at least partly enclosed by a wafer comprising the steps of:
providing a first wafer sheet comprising an array of interconnected half-shells,
providing a second wafer sheet comprising an array of interconnected half-shells, said half-shell each optionally provided with an opening for a filling purpose,
positioning the two wafer sheets in a corresponding fashion such that the half-shells belonging to separate sheets form a cavity,
filling the formed wafer cavities with a filling, and
releasing the filled cavities out of the wafer sheet.

The advantage of the present invention is that the sheets comprising an array of half-shells are first joined and upon joining form cavities which are then filled. This allows for a simultaneous production of a multitude of similar confectionery products. The method according to the invention allows therefore faster and simultaneous manufacture of confectionery products having a filling which is at least partly enclosed by a wafer.

An embodiment in the method for the preparation of confectionery products is that the second wafer sheet is a wafer sheet comprising an array of interconnected closed half-shells in which an opening is drilled prior to the filling, this offers the advantage that only one baking mould is used for the two wafer sheets.

In a preferred embodiment the second wafer sheet is provided with an array of interconnected half-shells, with each half-shells having an opening resulting from a previous baking operation of the sheets. The use of said wafer sheets where each half-shell have an opening allows a faster process of making the confectionery product, as no further drilling steps are needed prior to filling.

Preferably, the wafer cavity formed is filled by the injection of two ingredients in a concentric manner such that there is a first inner lining filling and a central filling. The filling is done by using an injection tool preferably comprising two concentric cylindric channels which allow the differential filling of the wafer cavity. This injection tool offers the advantage of being able to use two fillings in layers of different consistencies simultaneously.

Another aspect of the invention is that the length of time from the filling of the wafer cavity to the release of the confectionery product is such that the first inner lining filling is able to harden and to stick to the wafer shells in such a way that it provides a sealing effect. This effect permits the filling of the wafer cavity and the sealing of the two half-shells forming the cavity in one step.

The invention also provides that the filling of an array of wafer cavities is performed simultaneously and that the releasing of the filled wafer products is also done simultaneously. The filled wafer product could also be coated externally in a further step and in a later stage optionally wrapped.

The invention relates further to a wafer sheet comprising interconnected half-shells wherein each half-shell is provided with an opening for a filling purposes. This sheet is new compared to the closed sheets and advantageous in the method according to the invention because providing openings in the half-shells during the baking process avoiding a further drilling step during the process of making the confectionery product and making therefore the whole process a lot faster.

The invention is also related to a baking mould for wafer sheets comprising interconnected half-shells wherein each half-shell is provided with an opening for a filling. Said mould comprises an array of cavities having at the bottom of each a raised protuberance positioned as such that said raised surface remains free of wafer during moulding and baking. Said mould produces wafer sheet comprising an array of interconnected half-shells having each an opening for filling purposes.

The method of the invention also provides a confectionery product having an outer wafer layer, a first inner lining filling having a consistency such as upon hardening the wafer half-shells are joined together and a central filling having a different consistency from the first inner lining filling. Said confectionery product has an opening within the wafer shell which is closed by the first inner lining filling. After filling the wafer cavities, the first inner-lining filling harden on cooling allowing the sealing of the assembled two wafer sheets during the same step than the filling. Because of this feature no further joining or sealing steps are needed resulting in a faster manufacturing process of confectionery products.

In a further step the filled wafer shells are cut out of the wafer sheet in series and the confectionery products are released. This allows the simultaneous production of a multitude of similar confectionery products.

Said confectionery product may be provided with an additional external layer covering the wafer and the opening thereof. The filling of said confectionery product might also comprise a nut.

The invention will now be described purely by way of non-limiting examples with reference to the appended drawings in which:
figures 1a and 1b represent a cross sectional view of wafer sheets in their respective baking moulds according to an aspect of the preferred embodiment of the method of the invention,
figures 2 to 5 illustrate schematically in cross sectional views, steps in a preferred method of the invention,
figure 6 shows in a cross sectional view another aspect of the invention, and
figure 7 shows in a cross sectional view the confectionery product according to a method of the invention.

The fabricated confectionery products according to a method of the invention comprise a filling at least partly enclosed by a wafer shell consisting of two half-shells joined together.

Said confectionery product preferably comprising a crunchy shell made preferably of wafer and enclosing fillings, preferably a mass of hydrated or substantially hydrated creamy fillings. Optionally the wafer shell may enclose different layers of filling of different consistencies preferably filled concentrically. A nut might be included in the centre of the filling of the wafer shell. The filled wafer shell can be subjected, in know manner, to a covering or coating step for example with a chocolate-based substance which is creamy when hot and can be set by cooling. The coated confectionery product can also be subjected to the sprinkling of a particulate substance and decorative element such as chopped hazelnut, grated coconut etc., before the coating has set.

Although the confectionery product to be made is described throughout as comprising a wafer shell, it will be appreciated that the methods and apparatus of the invention are suited to the production of other mouldable food products.

The wafer shell may be of various dimensions according to the product and various shapes (for example, spherical, ovoid, bar, double-frusto pyramidal, etc...) for non-limiting simplifying purposes and for commodity the drawings show hemispherical half-shells of identical dimensions which upon joining form spherical wafer shells.

The filled wafer shell is constituted of two wafer half-shells coupled face to face forming a cavity which is filled. To manufacture said filled wafer shell, wafer sheets are first made by baking on moulds a wafer paste.

The moulds can be of metal or plastic of the type allowed by the regulations in force. Said mould comprises rows and ranks of mutually identical recesses forming an array of cavities of for example 15 by 15 or 20 by 30 cavities per mould. The mould can be made from plastic sheet in which cavities are formed as recesses by a blow moulding process of the like. According to a method of the invention, said moulds are preferably constituted of a parallelepiped block of metal comprising an array of cavities. Said moulds can optionally be coated and/or treated in such a way that food or other substance will not stick to them, such as Teflon coating.

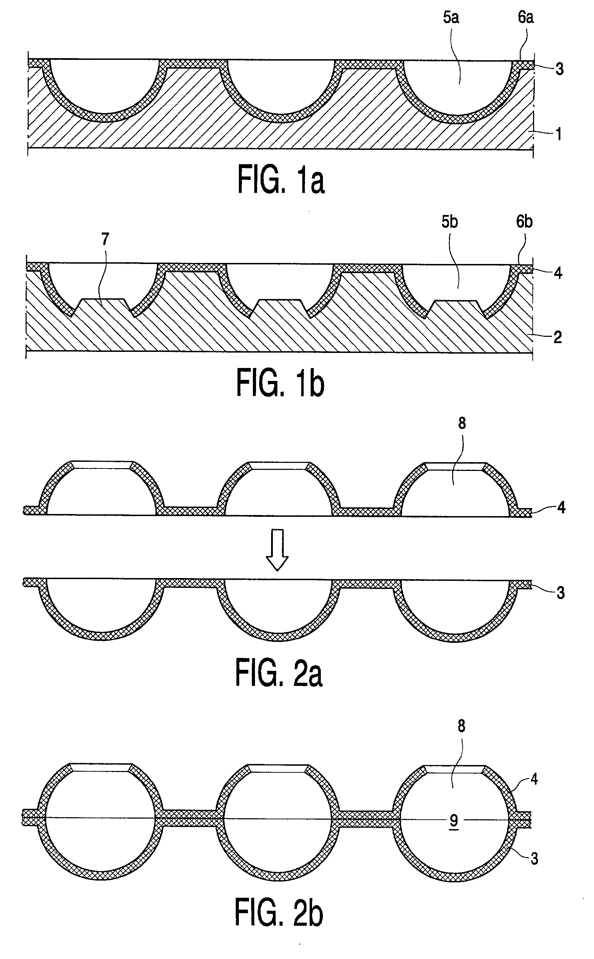

Figure 1a shows a drawing representing a portion of a wafer sheet 3 in its baking mould 1, said wafer sheet 3 comprising an array of half-shells 5a (3 of them represented in the drawing) interconnected by a web comprising in between the half-shells a flat wafer surface 6a.

Figure 1b represent a portion of a second wafer sheet 4 in its baking mould 2. Said wafer sheet 4 comprises an array of interconnected half-shells 5b (3 of them represented in the drawing) by a web comprising in between the half-shells a flat wafer surface 6b with said half-shells 5b comprising each an opening 8 for filling purposes. Said wafer sheet 4 is made using a specific mould 2.

Said mould 2 comprises an array of hemispherical cavities at the bottom of each there is a raised protuberance 7. Said raised protuberance is positioned as such that the raised surface remains free of wafer during the baking of the wafer sheet therefore producing a wafer sheet 4 comprising an array of interconnected half-shells 5b having each a round opening 8 for filling purposes.

Figure 2a shows a cross sectional view of a portion of the wafer sheets with 3 half-shells per wafer sheet and illustrates the assembling process of the wafer sheets 3 and 4. The two wafer sheets 3 and 4 are positioned face to face so that the corresponding half-shells of each wafer sheet form upon joining wafer cavities 9 each with an opening 8 and that the flat surfaces interconnecting two consecutive half-shells are in contact (figure 2b).

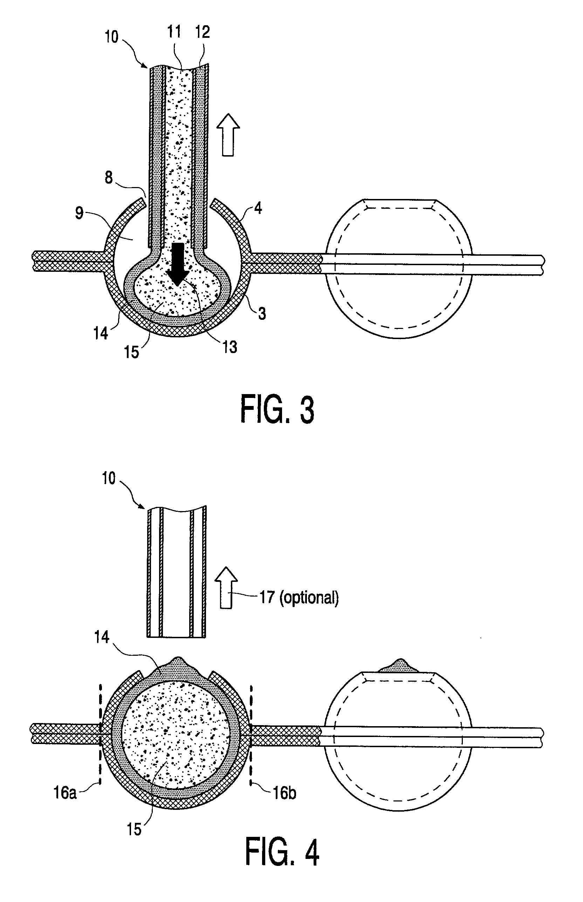

The filling process 13 is partly illustrated in figure 3 which shows only a portion of the assembled wafer sheets 3 and 4. The filling process comprises the use of specific injection tools for the conveyance of the filling into the wafer shell cavities 9. The injection tool 10 is positioned as such as to provide an optimised filling of the wafer cavity. The injection tool 10 is optionally made of two concentric cylindric channels 11 and 12 that allow the filling of the cavity 9 in a concentric manner so that there is a first inner lining filling 14 and a central filling 15 of different consistencies. The consistency of the first inner lining 14 is such that it adheres to the wafer inner surface and that upon cooling it hardens. The filling process is done as such that the opening 8 within the wafer shell is closed by said first inner lining filling 14 (Figure 4). After filling, the first inner lining filling 14 harden on cooling allowing the sealing of the assembled two wafer sheets 3 and 4 during the same step that the filling. These 'one shot" techniques are known in the art. It is self implied that other filling techniques are also possible.

Figure 4 is a cross sectional view of a portion of assembled filled wafer sheets and represents the optional removal 17 of the injection tool 10 after completion of the filling step. The filled wafer shells are composed of a first inner lining filling 14 and a central filling 15 and are in a further step cut out from the wafer sheet along the lines 16a, 16b.

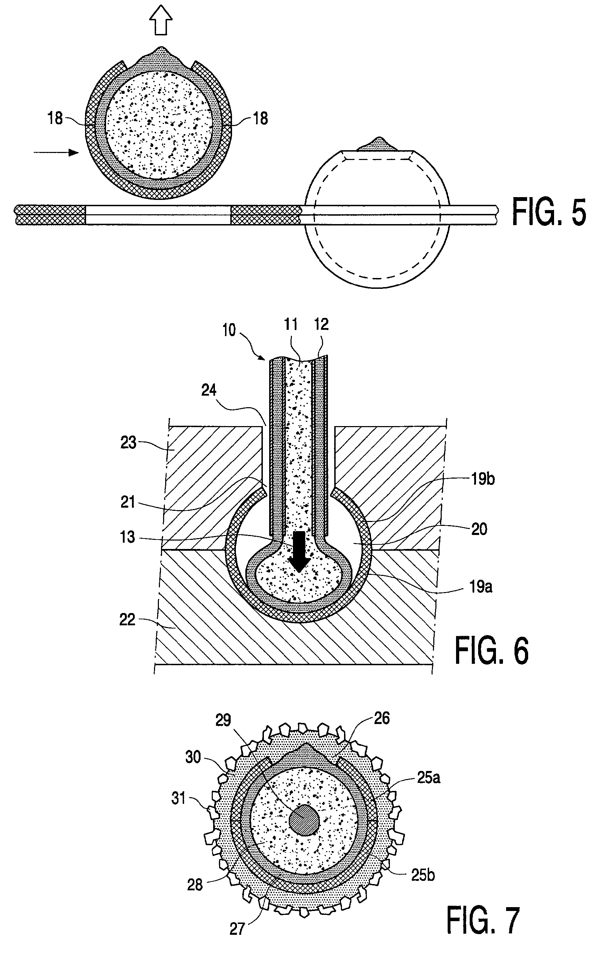

The obtained filled wafer shell 18 is released as illustrated in figure 5 and the remaining interconnecting flat surfaces are then disposed and optionally re-used for example in the animal food industry.

The filled wafer shell 18 may be optionally coated by one or more external coating layers, possibly with addition of a sprinkled substance and decorative elements. The confectionery product may also comprise in its filling a nut. In a further step the confectionery product can also be wrapped.

The present invention also provides in another aspect a method and apparatus for manufacturing confectionery products (partly illustrated in figure 6) having a filling at least partly enclosed by a wafer shell. It comprises the steps of placing first place the wafer shell composed of two half-shells in moulds, filling the wafer cavity formed upon joining with a filling and releasing the filled cavities out of the moulds.

The method of producing said confectionery product according to another aspect of a method of the invention will now be described with particular reference to figure 6.

The wafer shell of the confectionery product is constituted of a first and a second wafer half-shell respectively 19a, 19b which when positioned face to face form upon joining a cavity 20 which can be filled.

The wafer shell may be of various dimensions according to the product and various shapes (for example, spherical, ovoid, bar, double-frusto pyramidal, etc...) for non-limiting simplifying purposes the drawing in figure 6 shows hemispherical half-shells which upon joining are forming a spherical wafer shell.

The manufacture of said confectionery product comprises the step of placing first and second wafer half-shells 19a, 19b, into a first and a second half-moulds 22, 23. The second wafer half-shell 19b comprises an opening 21 for filling purposes.

The half-moulds can be of metal or plastic of the type allowed by the regulations in force. Said half-moulds may comprise rows and ranks of mutually identical recesses forming an array of cavities of for example 15 by 15 or 20 by 30 cavities per half-mould.

The half-moulds can be made from plastic sheet in which cavities are formed as recesses by a blow moulding process of the like. According to a method of the invention, said half-moulds are preferably constituted of parallelepiped blocks of metal comprising an array of cavities. First and second half-moulds 22, 23 respectively have respective array of cavities, The cavities of second half-mould 23 comprises also an opening or duct 24 as shown in figure 6 for filling purposes. The half-moulds can optionally be coated and/or treated in such a way that food or other substance will not stick to them, using for example Teflon coating.

Figure 6 represent a cross sectional view of a portion of first and second half-moulds 20, 21 positioned face to face, in the cavities of which are placed two wafer half-shells 19a, 19b forming a wafer shell upon joining. First and second half-moulds 20, 21 respectively have respective cavities, the cavity of second half-mould 21 comprises also a duct 22. The second wafer half-shell 19b placed in the cavity of half-mould 23 comprises an opening 21 positioned as such that the opening 21 and the duct 24 of the second half-mould 23 correspond with each other forming an opening for filling purposes.

Upon positioning face to face the first and the second half-moulds 22, 23, comprising respectively wafer half-shells 19a and 19b, a wafer cavity 20 is formed comprising an opening 21 through which the wafer shell can be filled. Said wafer cavity 20 can be filled using an injection tool 10 for the conveyance of the filling into said cavity 20. The injection tool is optionally made of two concentric cylindric channels 11 and 12 that allow the filling of the wafer cavity 20 in a concentric manner so that there is a first inner lining filling and a central filling of different consistencies. The consistency of the first inner lining is such that it adheres to the wafer inner surface and that upon cooling it hardens. The filling process is done as such that the opening 21 within the wafer shell is closed by said first inner lining filling. After filling, the first inner lining filling harden on cooling therefore sealing the two wafer half-shells together during the filling step.

Optionally the confectionery product may comprise in its central filling a nut. The filled wafer shell is, in a further step, released by separating the two half-moulds 22 and 23. The confectionery product obtained can be optionally externally coated by one or more coating layers, possibly with addition of a sprinkled substance and decorative elements.

The confectionery products according to a method of the invention will now be described with particular reference to figure 7. The confectionery product comprises a crunchy shell made preferably of wafer and enclosing a filling. The wafer shell of said confectionery product is constituted of a first and a second wafer half-shell respectively 25a and 25b, positioned face to face and forming a cavity upon joining. The second wafer half-shell 25b comprises an opening 26 through which the wafer shell was filled. The wafer shell may optionally enclose different layers of filling of different consistencies. The wafer shell is preferably filled concentrically so that there is a first inner lining filling 27 and a central filling 28, with the first inner lining filling 27 adhering to the wafer shell and hardening upon cooling therefore sealing the two wafer half-shells together during the filling step. The filling process is done as such that the opening 26 within the wafer shell is closed by said first inner lining filling.

The central filling 28 is preferably a mass of hydrated or substantially hydrated creamy fillings. A nut 29 might be included in the centre of the filling of the wafer shell. The filled wafer shell can be subjected, in know manner, to a covering or coating step for example with a chocolate-based substance which is creamy when hot and can be set by cooling. The filled wafer shell represented in figure 7 is coated by one external coating layer 30 however it is understood that said wafer shell can be externally coated by one or more external coating layer. The coated confectionery product can also be subjected to the sprinkling of a particulate substance 31 and decorative element such as chopped hazelnut, grated coconut etc., before the coating has set.

The confectionery product can be optionally wrapped using techniques widely known in the confectionery industry preferably in a wrinkled paper, which can be twisted or not.

## Claims

1. Method for the preparation of confectionery products having a filling which is at least partly enclosed by a wafer comprising the steps of:
providing a first wafer sheet (3) comprising an array of interconnected half-shells (5a),
providing a second wafer sheet (4) comprising a similar array of interconnected half-shells (5b), said half-shells optionally provided with an opening (8) for a filling purpose,
positioning the two wafer sheets in a corresponding fashion such that two arrays of half-shells form cavities (9) suitable for filling purposes,
filling the said cavities with a filling and
releasing the filled cavities out of the wafer sheet.

2. A method according to claim 1, wherein the second wafer sheet is a wafer sheet comprising closed half-shells wherein an opening is drilled in each half-shells prior to the filling.

3. A method according to claim 1, wherein the second wafer sheet is provided with each of its half-shells having an opening resulting from a previous baking operation.

4. A method according to claims 1, 2 or 3, **characterized in that**, the filling step is performed by the injection of two filling ingredients, said filling is such that the wafer cavities are filled by two concentric layers of different consistencies forming a first inner lining filling and a central filling.

5. A method according to any of the previous claims 1 to 4, wherein the length of time from the filling to the release of the product is such that the first inner lining filling is able to harden and to adhere to the inner wafer shell surfaces in such a way that it provides a sealing effect.

6. A method according to any of the previous claims 1 to 5, wherein the filling of an array of wafer cavities is performed simultaneously.

7. A method according to any of the previous claims 1 to 6, wherein the releasing of an array of filled wafer products is done simultaneously.

8. A method according to any of the previous claims 1 to 7, wherein a further external coating is provided for the coating of the outer wafer shell of a confectionery product obtained in claims 1 to 7.

9. A wafer sheet (4) comprising an array of interconnected half-shells comprised in a web, wherein each half-shell is provided with an opening (8) for a filling purpose.

10. A baking mould (2) for a wafer sheet (4) of claim 9.

11. A baking mould (2) of claim 10; wherein said mould (2) is composed of an array of cavities comprising at the bottom of each a raised protuberance (7) positioned as such that said raised surface remains free of wafer during moulding and baking so that it produces wafer sheet (4) of claim 9 comprising an array of interconnected half-shells having each an opening (8).

12. A confectionery product obtainable by the method according to any of claims 1 to 8 having an outer wafer layer, a first inner lining filling having a consistency such as upon hardening the wafer half-shells are sealed together and optionally a different central filling having a different consistency from the first inner lining filling, said confectionery product having an opening in each shell which is closed by the first inner lining filling.

13. A confectionery product according to claim 12 provided with another outer coating covering the wafer and the opening thereof.

14. A confectionery product according to claims 12 and 13 in which the central filling comprises a nut.
